# DEMANDE DE BREVET EUROPEEN

(11) **EP 2 237 244 A2**
(43) Date de publication de la demande: **06.10.2010**
(21) Numéro de dépôt: 10158242.7
(22) Date de dépôt: 29.03.2010
(51) Int. Cl.: G09B 29/00

(54) **Procédé de détermination des points caractéristiques d'un pont sur une carte d'aéroport**

(30) Priorité: 03.04.2009 FR 0901642
(71) Demandeur: Thales, 92200 Neuilly Sur Seine (FR)
(72) Inventeur: Biarnes, Caroline, 31500 Toulouse (FR); Rakotoarisoa, Erick, 31170 Tournefeuille (FR); Gamet, Pierre, 31700 Blagnac (FR)
(74) Mandataire: Esselin, Sophie

(57) **Abrégé**

L'invention est un procédé automatique permettant de déterminer les points caractéristiques (P1,P2,P3,P4) d'un pont (B) ainsi que leur ordonnancement correct à partir d'une base de données aéroportuaire, en vue de permettre la représentation graphique correcte dudit pont (B) sur une carte d'aéroport digitalisée.

L'un des principaux avantages de l'invention réside dans son caractère automatique.

## Description

La présente invention concerne le traitement de bases de données aéroportuaires dans le cadre de la norme ARINC816 en vue de réaliser des cartes d'aéroports. Plus précisément, l'invention consiste en un procédé permettant la détermination et l'ordonnancement des points caractéristiques de ponts sur des cartes d'aéroports.

Le contexte général est celui de l'application de la norme ARINC816 qui impose un format spécifique pour les bases de données de cartes aéroportuaires. Ces bases de données aéroportuaires permettent, une fois compilées sous forme de cartes digitalisées, aux pilotes d'aéronefs de se positionner sur lesdites cartes d'aéroport digitalisées lors des phases de décollage, d'atterrissage ou de roulage. Les bases de données aéroportuaires sont élaborées par des sociétés spécialisées, appelées fournisseurs de données, et doivent être mises à jour régulièrement, typiquement tous les 28 jours.
De manière plus précise, on s'intéresse à des éléments particuliers de ces bases de données aéroportuaires conformes à la norme ARINC816 : les éléments correspondant à des voies de roulage ou voies de relation, plus couramment appelés « taxiway elements », le terme anglais consacré que l'on utilisera par la suite. Ces voies de roulage sont définies comme des ensembles de polygones, correspondant à des routes sur lesquels les aéronefs peuvent rouler et qui ne sont pas des pistes de décollage ou d'atterrissage. Chaque polygone possède une identité, correspondant à un identifiant. La norme ARINC816 spécifie qu'il doit être possible de symboliser de manière spécifique et visible les ponts. En effet, les ponts sont des éléments cruciaux des cartes d'aéroport, du point de vue de la sécurité. Pour repérer ces ponts, la norme ARINC816 stipule que les fournisseurs de données doivent indiquer où se trouvent les ponts et s'ils sont au-dessus ou au-dessous d'une autre voie. Les fournisseurs de données, par ailleurs contraints par la précision réelle des données qu'ils communiquent, donnent en général un ensemble de points pour caractériser un pont. De tels ensembles de points peuvent constituer des polygones complexes.
Le problème posé est de déterminer les quatre points caractéristiques d'un pont, correspondant sensiblement aux quatre coins dudit pont, à partir d'un polygone complexe, et de les ordonnancer afin de permettre une orientation correcte du pont sur la carte d'aéroport correspondante. L'objectif est de déterminer, à partir de l'ensemble de points fourni, deux paires de points caractéristiques, chaque paire de points constituant sensiblement un côté du pont.

Actuellement, les fournisseurs de données fournissent donc, pour
caractériser un pont, un ensemble de points pouvant constituer un polygone complexe. Le problème est de déterminer deux paires de points correctement ordonnancés, de manière à pouvoir représenter correctement ledit pont sur une carte aéroportuaire. Aucun procédé automatique ne permet actuellement de mener à bien cette tâche : c'est l'objet de la présente invention.

A cet effet, l'invention a pour objet un procédé de détermination et d'ordonnancement des points caractéristiques d'un pont sur une carte d'aéroport, ladite carte d'aéroport comprenant :
- un ensemble de polygones caractérisant des éléments de type voie de relation, chaque polygone présentant un identifiant, et chaque polygone étant défini par un ensemble de points, chaque point commun à deux polygones ayant une représentation mathématique unique,
- un pont défini par un ensemble d'au moins quatre points,
caractérisé en ce qu'il comprend les étapes suivantes :
- la détermination d'un ensemble de polygones voisins dudit pont parmi l'ensemble de polygones,
- pour chaque point du pont, la vérification de son égalité éventuelle avec un point de l'un des polygones voisins, par conséquent appelé polygone adjacent, de manière à construire un ensemble de 2 à N points communs, N étant supérieur ou égal à 4,
- l'enregistrement, pour chaque point commun, de l'identité du ou des polygones auxquels il appartient,
- la détermination de quatre points caractéristiques du pont, notamment parmi les points communs trouvés à l'étape 2,
- la détermination des deux paires de points caractéristiques, correspondant à une étape d'ordonnancement desdits points caractéristiques, lesdites paires constituant des segments approximativement parallèles au sens de circulation sur le pont.

Selon l'invention, l'ensemble des polygones voisins correspond à l'ensemble des polygones dont le barycentre se trouve à une distance du pont inférieure à un seuil prédéfini.
Le seuil prédéfini peut valoir 300 mètres.

Avantageusement, lorsque la recherche des points communs à l'étape 2 du procédé aboutit à la détermination d'un ensemble de quatre points communs, correspondant auxdits quatre points caractéristiques, dont deux appartiennent à un premier polygone adjacent et deux appartiennent à un second polygone adjacent, l'étape 5 du procédé, correspondant à l'ordonnancement et à la détermination des deux paires de points caractéristiques consiste en :
- la définition de deux paires potentielles comprenant, pour la première, un premier point du premier polygone adjacent et un premier point du second polygone adjacent et, pour le second, un second point du premier polygone adjacent et un second point du second polygone adjacent,
- la recherche d'une intersection entre les segments définis par les deux paires potentielles :

- s'il n'existe pas d'intersection, les paires potentielles constituent les paires de points caractéristiques du pont,
- s'il existe une intersection, les paires de points caractéristiques du pont sont constituées, pour l'une, du premier point du premier polygone adjacent et du second point du second polygone adjacent, et, pour l'autre, du second point du premier polygone adjacent et du premier point du second polygone adjacent.

Avantageusement, pour la détermination des quatre points caractéristiques à l'étape 4 du procédé, les points communs déterminés à l'étape 2 du procédé et appartenant, en plus du pont, à au moins deux polygones adjacents, sont éliminés et ne peuvent pas constituer des points caractéristiques du pont.
Avantageusement, si l'étape 2 du procédé, de détermination d'un ensemble de points communs, n'aboutit qu'à la détermination de deux points communs, lesdits deux points communs constituant deux points caractéristiques du pont et appartenant à un même polygone adjacent, ledit procédé comprend des moyens pour déterminer les deux autres points caractéristiques du pont par l'intermédiaire de méthodes de traitement mathématique.

D'autres caractéristiques et avantages de l'invention apparaîtront à l'aide de la description qui suit faite en regard des dessins annexés qui représentent :
- la figure 1 : le schéma d'un exemple de données brutes d'une base de données aéroportuaires, comprenant un pont ;
- la figure 2a : un schéma représentant la détermination de deux paires de points caractéristiques d'un pont, ordonnancées de façon erronée ;
- la figure 2b : un schéma représentant la détermination de deux paires de points caractéristiques d'un pont, correctement ordonnancées ;
- la figure 3 : le schéma d'un exemple de carte aéroportuaire sur laquelle un pont comprend deux polygones adjacents du même côté ;
- la figure 4 : le schéma d'un exemple de carte aéroportuaire sur laquelle un pont présente un côté ne comprenant pas de polygone adjacent.

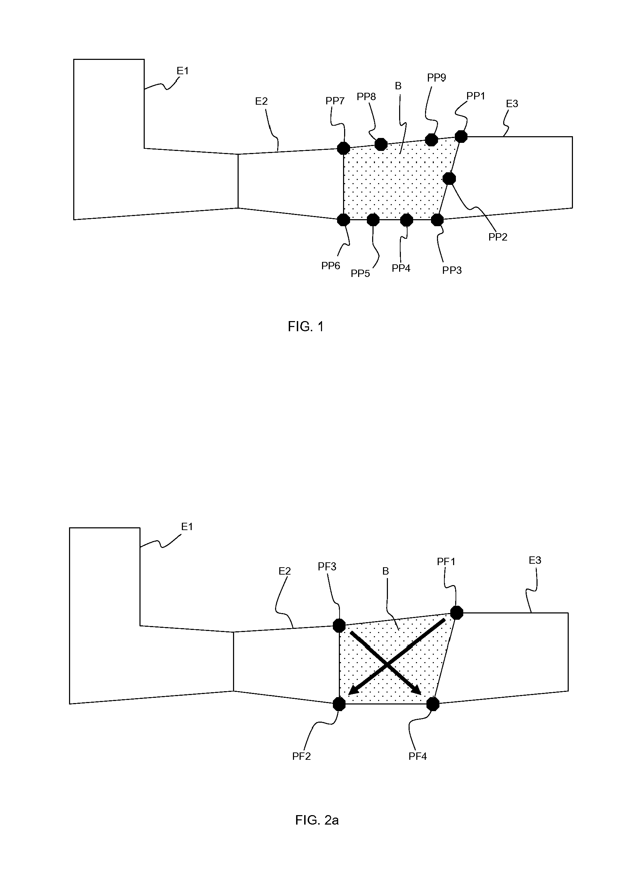

La figure 1 est un schéma représentant une fraction de voie de roulage d'un aéroport. Les éléments correspondant, dans une base de données aéroportuaires, sont des « taxiway elements », comme cela a été décrit plus haut. Les « taxiway elements » sont constitués d'un ensemble de polygones E1, E2, E3. Un pont B est un « taxiway element » particulier, constitué d'un unique polygone. Dans le cadre de la mise en oeuvre de la norme ARINC816, et comme on l'a signalé précédemment, les fournisseurs de données indiquent la situation des ponts, tels que le pont B, caractérisé par un ensemble de points PP1, PP2, PP3 ; PP4, PP5, PP6, PP7, PP8, PP9 constituant un polygone complexe.
L'invention consiste à déterminer, parmi cet ensemble de points fourni, les quatre points caractéristiques du pont B, et à les ordonnancer de manière à permettre la représentation correcte dudit pont B sur une carte digitalisée d'aéroport.

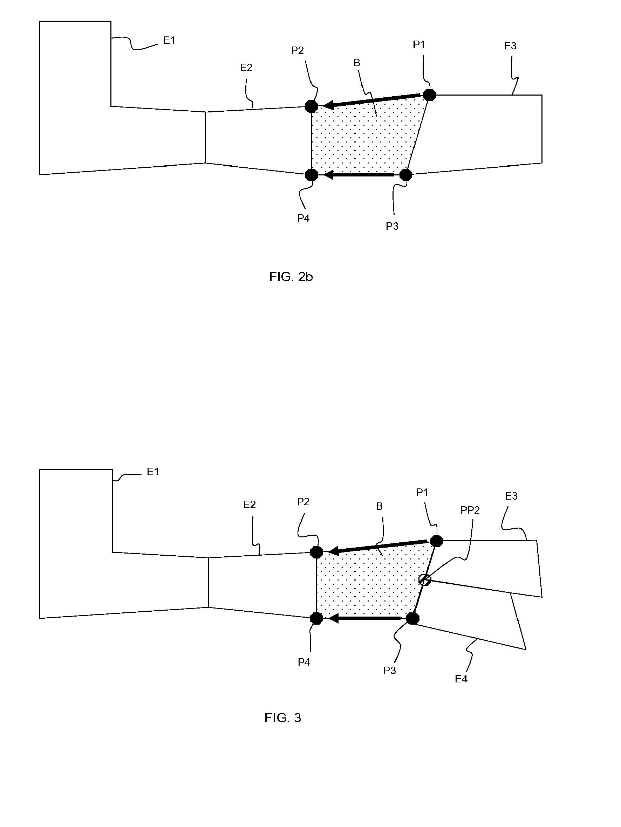

La figure 2a illustre tout d'abord la méthode de détermination des quatre points caractéristiques du pont B, selon l'invention. Dans une première phase, on identifie les polygones adjacents E2, E3 ou potentiellement adjacents E1, du pont B. Pour cela, on peut repérer les polygones appartenant au même « taxiway element » : c'est à dire ceux qui portent le même nom. On extrait ensuite ceux dont le barycentre est proche du polygone correspondant au pont B. Sont considérés comme proche du pont B les barycentres situés à une distance inférieure à un seuil prédéfini dudit pont B. Ce seuil prédéfini peut être par exemple fixé à 300 mètres. On détermine ainsi, dans l'exemple de la figure 2, les deux polygones adjacents E2 et E3.
Dans un deuxième temps, on analyse, pour chaque point du pont B, correspondant aux points PP1 à PP9 de la figure 1, s'il est égal à un point appartenant à l'un des polygones adjacents E2, E3 trouvés à l'étape précédente. Il est à noter ici que les données fournies dans les bases de données aéroportuaires dans le cadre de la mise en oeuvre de la norme ARINC816 sont telles que deux points égaux sont obligatoirement identifiés comme un seul et même point. Il n'est pas possible d'avoir deux points géographiquement identiques mais différents d'un point de vue mathématique.

De cette façon, la figure montre que les points PF1, PF2, PF3, PF4 sont déterminés comme les quatre points caractéristiques du pont B.
Mais la figures 2a montre également que si les quatre points caractéristiques PF1 à PF4 ne sont pas ordonnancés correctement, la représentation automatique et correcte du pont B sur une carte digitalisée ne peut pas être garantie. En effet, si on détermine des paires de points caractéristiques de façon arbitraire, par exemple ici PF1 avec PF2 et PF3 avec PF4, on obtient une représentation incorrecte du pont. Il en va de même si on détermine une paire PF1 - PF4 et une autre PF2 - PF3.
La présente invention permet de garantir la possibilité de déterminer les deux paires de points caractéristiques correctes, permettant de représenter de manière adéquate les ponts B sur une carte d'aéroport.

La figure 2b représente une fraction de « taxiway elements » dans laquelle le pont B est déterminé par deux paires de points caractéristiques correctement ordonnancées. Pour déterminer les deux paires de points caractéristiques correctes, P1 - P2 et P3 - P4 dans l'exemple de la figure 2b, le procédé selon l'invention comprend une étape d'enregistrement, pour chaque point du pont B, de l'identité du polygone adjacent auquel il appartient. Ainsi, parmi l'ensemble de points PP1 à PP9 de la figure 1, on identifie le point P1 sur la figure 2b - correspondant au point PP1 sur la figure 1 - comme caractéristique du pont B, conformément à la première phase décrite à la figure 2a ; lors de la même étape, on enregistre que ce point P1 caractéristique du pont B appartient en outre au polygone E3. De la même façon, on enregistre que le point P2, caractéristique du pont B, appartient au polygone E2, que le point P3, caractéristique du pont B, appartient au polygone E3, et que le point P4, caractéristique du pont B, appartient au polygone E2.
Au risque de représenter un pont B dont le sens de circulation serait orthogonal au sens de circulation sur le « taxiway element » voisin, on sait qu'une paire de points caractéristiques ne peut appartenir à un même polygone adjacent. On en déduit donc que P1 et P3 d'une part, et P2 et P4 d'autre part, appartiennent à des paires différentes. Dès lors, il n'existe que deux combinaisons possibles :
- P1 et P4 forment une paire caractéristique et P2 et P3 forment l'autre paire caractéristique ;
   ou :

- P1 et P2 forment une paire caractéristique et P3 et P4 forment l'autre paire caractéristique.

On fait alors un choix provisoire arbitraire ; par exemple P1 forme une paire avec P4 et P2 forme une paire avec P3. On effectue alors une analyse géométrique pour détecter une éventuelle intersection entre les segments correspondant aux paires arbitrairement formées. S'il n'y a pas d'intersection, le choix était juste et on a donc trouvé l'ordonnancement correct des points caractéristiques. S'il y a une intersection entre les segments, les paires de points caractéristiques du pont B sont celles de la seconde combinaison. Dans l'exemple de la figure 2b, on détermine grâce au procédé selon l'invention les deux paires de points caractéristiques suivantes : P1 avec P2 et P3 avec P4. De cette façon, il est possible de représenter correctement le pont B sur une carte aéroportuaire, de façon totalement automatisée.

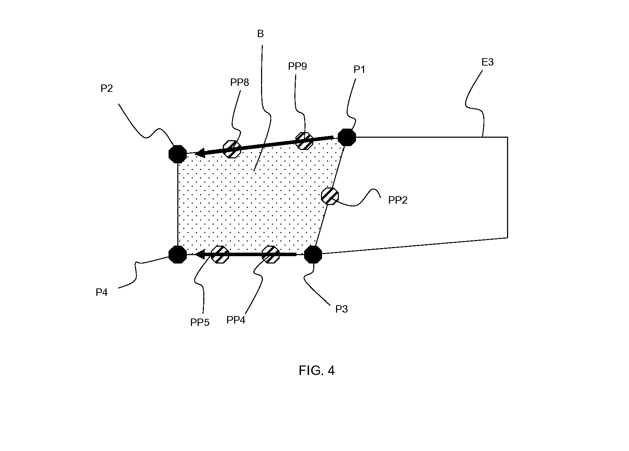

Les figures 3 et 4 présentent des cas particuliers que l'invention permet également de traiter. Dans le cas de la figure 3, le pont B présente deux polygones adjacents du même côté, ici sur sa droite. Le point PP2, appartenant à l'ensemble de points fournis pour caractériser le pont B, peut constituer une ambiguïté car il appartient au pont B et à un polygone E3 ; pourtant, il ne constitue pas un point caractéristique du pont B, les points P1, P2, P3, P4 étant mieux placés. Dans ce cas, un mode préféré de mise en oeuvre du procédé selon l'invention permet d'éliminer le point PP2 car il appartient, en plus du pont B, à deux polygones distincts E3 et E4. Selon l'invention, on considère pour cette raison ce point PP2 comme non caractéristique du pont B.
La figure 4 présente le cas où, d'un côté du pont B, ici sur sa gauche, aucun polygone adjacent n'existe ou n'a été détecté. Dans ce cas, en suivant les étapes du procédé selon l'invention décrites à la figure 2a, on ne détecte que deux points caractéristiques P1 et P3. Mais conformément à la précision apportée à la figure 2b, on enregistre le fait que les points P1 et P3 appartiennent au même polygone E3 et qu'ils ne peuvent donc pas constituer une paire de points caractéristiques du pont B. Selon une mise en oeuvre particulière du procédé selon l'invention, on détermine alors, parmi les points potentiels PP4, PP5, P4, P2, PP8 et PP9, les deux autres points caractéristiques P2 et P4 par des méthodes de traitement mathématique comme étant les points les plus éloignés, respectivement de P3 et de P1, parmi les points potentiels. On reconstitue ensuite les paires de points caractéristiques P1 - P2 et P3 - P4 de manière aisée, en suivant l'étape de procédé décrite à la figure 2b.

En résumé, l'invention est un procédé automatique permettant de déterminer les points caractéristiques d'un pont ainsi que leur ordonnancement correct à partir d'une base de données aéroportuaires, en vue de permettre la représentation graphique correcte dudit pont sur une carte d'aéroport digitalisée.
L'un des principaux avantages de l'invention réside dans son caractère automatique.

## Revendications

1. Procédé de détermination et d'ordonnancement des points caractéristiques d'un pont sur une carte d'aéroport, ladite carte d'aéroport comprenant :
• un ensemble de polygones (E1,E2,E3) caractérisant des éléments de type voie de relation, chaque polygone (E1,E2,E3) présentant un identifiant, et chaque polygone (E1,E2,E3) étant défini par un ensemble de points, chaque point commun à deux polygones (E1,E2,E3) ayant une représentation mathématique unique,
• un pont (B) défini par un ensemble d'au moins quatre points (PP1,PP2,PP3,PP4,PP5,PP6,PP7,PP8,PP9),
**caractérisé en ce qu'**il comprend les étapes suivantes :
• la détermination d'un ensemble de polygones voisins (E2,E3) dudit pont (B) parmi l'ensemble de polygones (E1,E2,E3),
• pour chaque point (PP1,PP2,PP3,PP4,PP5,PP6,PP7,PP8,PP9) du pont (B), la vérification de son égalité éventuelle avec un point de l'un des polygones voisins (E1,E2,E3), par conséquent appelé polygone adjacent (E2,E3), de manière à construire un ensemble de 2 à N points communs, N étant supérieur ou égal à 4,
• l'enregistrement, pour chaque point commun, de l'identité du ou des polygones (E2,E3) auxquels il appartient,
• la détermination de quatre points caractéristiques (P1,P2,P3,P4) du pont (B), notamment parmi les points communs trouvés à l'étape 2,
• la détermination des deux paires (P1-P2,P3-P4) de points caractéristiques, correspondant à une étape d'ordonnancement desdits points caractéristiques (P1,P2,P3,P4), lesdites paires (P1-P2,P3-P4) constituant des segments approximativement parallèles au sens de circulation sur le pont (B).

2. Procédé selon la revendication 1, **caractérisé en ce que** l'ensemble des polygones voisins (E1,E2,E3) correspond à l'ensemble des polygones dont le barycentre se trouve à une distance du pont (B) inférieure à un seuil prédéfini.

3. Procédé selon la revendication 2, **caractérisé en ce que** le seuil prédéfini vaut 300 mètres.

4. Procédé selon l'une quelconque des revendications précédentes, la recherche des points communs à l'étape 2 du procédé ayant abouti à la détermination d'un ensemble de quatre points communs, correspondant auxdits quatre points caractéristiques (P1,P2,P3,P4), dont deux appartiennent à un premier polygone adjacent (E3) et deux appartiennent à un second polygone adjacent (E2), **caractérisé en ce que** l'étape 5 du procédé, d'ordonnancement et de détermination des deux paires (P1-P2,P3-P4) de points caractéristiques consiste en :
• la définition de deux paires potentielles comprenant, pour la première, un premier point du premier polygone adjacent (E3) et un premier point du second polygone adjacent (E2) et, pour le second, un second point du premier polygone adjacent (E3) et un second point du second polygone adjacent (E2),
• la recherche d'une intersection entre les segments définis par les deux paires potentielles :
o s'il n'existe pas d'intersection, les paires potentielles constituent les paires (P1-P2,P3-P4) de points caractéristiques du pont (B),
o s'il existe une intersection, les paires (P1-P2,P3-P4) de points caractéristiques du pont sont constituées, pour l'une, du premier point du premier polygone adjacent (E3) et du second point du second polygone adjacent (E2), et, pour l'autre, du second point du premier polygone adjacent (E3) et du premier point du second polygone adjacent (E2).

5. Procédé selon l'une quelconque des revendications précédentes, **caractérisé en ce que,** pour la détermination des quatre points caractéristiques (P1,P2,P3,P4) à l'étape 4 du procédé, les points communs déterminés à l'étape 2 du procédé et appartenant, en plus du pont (B), à au moins deux polygones adjacents (E3,E4), sont éliminés et ne peuvent pas constituer des points caractéristiques (P1,P2,P3,P4) du pont (B).

6. Procédé selon l'une quelconque des revendications précédentes, **caractérisé en ce que,** si l'étape 2 du procédé, de détermination d'un ensemble de points communs, n'aboutit qu'à la détermination de deux points communs, lesdits deux points communs constituant deux points caractéristiques (P1,P3) du pont (B) et appartenant à un même polygone adjacent (E3), ledit procédé comprend des moyens pour déterminer les deux autres points caractéristiques (P2,P4) du pont (B) par l'intermédiaire de méthodes de traitement mathématique.
